(19) Europäisches Patentamt

European Patent Office

Office européen des brevets

(11) EP 1 674 895 A1

(12) EUROPEAN PATENT APPLICATION

(43) Date of publication:
28.06.2006 Bulletin 2006/26

(51) Int Cl.:
$G02B\ 5/18^{(2006.01)}$     $G01D\ 5/38^{(2006.01)}$

(21) Application number: 05258041.2

(22) Date of filing: 23.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 24.12.2004 JP 2004373491

(71) Applicant: CANON KABUSHIKI KAISHA
Tokyo (JP)

(72) Inventors:
• Isano, Taisuke, c/o Canon Kabushiki Kaisha
Tokyo (JP)
• Ishizuka, Ko, c/o Canon Kabushiki Kaisha
Tokyo (JP)

(74) Representative: Legg, Cyrus James Grahame et al
ABEL & IMRAY,
20 Red Lion Street
London WC1R 4PQ (GB)

(54) **Surface reflection type phase grating**

(57) A surface reflection type phase grating 21 in which first metal film 23 is formed on a substrate 22, metal gratings 24 of a rectangular cross-sectional shape having a thickness d for which first-order diffraction becomes maximum by second metal film 24 formed of a material differing from that of the first metal film 23 is formed thereon, and transparent dielectric film 26 formed of $SiO_2$ is further formed on the surfaces of the metal gratings 24 and the first metal film 23 exposed among them, and a displacement measuring apparatus adopting the surface reflection type phase grating.

# FIG. 1

EP 1 674 895 A1

## Description

BACKGROUND OF THE INVENTION

Field of the Invention

This invention relates to a surface reflection type phase grating comprising a relief type diffraction grating formed on a substrate.

Related Background Art

A known surface reflection type phase grating is disclosed, for example, in Japanese Utility Model Publication No. S61-39289, and a displacement measuring apparatus using the same is also disclosed.

This phase diffraction grating is formed as a relief type diffraction grating by forming a periodic groove on a glass substrate.

Further, a reflective film of Au, Al or the like is vapor-deposited on the surface of this periodic groove, whereby an optical scale is constructed.

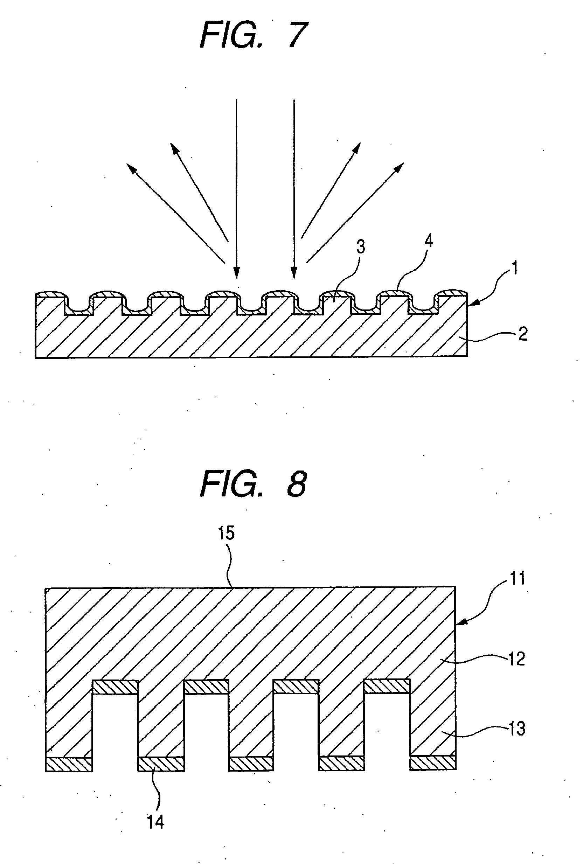

Fig. 7 of the accompanying drawings shows a cross-sectional view of an optical scale 1. A relief type diffraction grating 3 is formed on a substrate 2, and reflecting film 4 is vapor-deposited on the upper layer thereof.

A light beam is projected onto the relief type diffraction grating 3 formed on the substrate 2, and the diffracted reflected rays of the projected light beam are made to interfere with each other to thereby form an interference pattern. Further, this interference pattern is photo-electrically converted to measure the displacement of the optical scale 1.

Such a relief type diffraction grating 3 can weaken the intensity of regular reflected light which is zero-order reflected and diffracted light by suitably determining the height of the groove. As a result, the intensity of high-order reflected and diffracted light used for the measurement can be intensified.

However, since the reflecting film 4 is vapor-deposited on the surface of the groove of the diffraction grating 3, the film thickness of the reflecting film 4 fluctuates by the unevenness of vapor deposition. As a result, the shape and depth of the groove are varied and the quantity of the diffracted light may fluctuate. Accordingly, under the influence of this fluctuation, there is the possibility that highly accurate measurement cannot be effected.

Also, as shown in Fig. 8 of the accompanying drawings, there is known a displacement measuring apparatus using an optical scale 11. (Japanese Patent Application Laid-open No. H2-25416).

In this optical scale 11, a relief type diffraction grating 13 is formed on the back of a transparent substrate 12, and a reflecting film 14 is formed on the diffraction grating 13.

An interference pattern is formed by the use of diffracted light produced by a light beam being applied from the front surface side 15 of the transparent substrate 12.

This interference pattern is photo-electrically converted, such that the displacement of the optical scale 11 can be measured.

In this optical scale 11, there are produced the reflected and diffracted rays of the light beam applied from the front surface side 15 and therefore, the fluctuation of the quantity of diffracted light attributable to the fluctuation of the film thickness of the reflecting film 14 does not occur. Accordingly, there is obtained an optical scale of very high accuracy.

However, in the case of this back surface reflection type diffraction grating shown in Fig. 8, the light is transmitted through the transparent substrate 12 and therefore, under the influence of the reflection on the front surface 15 of the transparent substrate 12, the quantity of light fluctuates.

Further, if the plate thickness of the transparent substrate 12 is increased in order to improve the rigidity of the transparent substrate 12, an optical path transmitted through the transparent substrate 12 will lengthen and the quantity of light will be decreased.

If conversely, the plate thickness of the transparent substrate 12 is reduced in order to suppress the influence of transmitted light, the rigidity of the transparent substrate 12 will be reduced, and warp or flexure will be liable to occur to the transparent substrate 12. Under the influence of this flexure, there is the possibility that it may be come impossible to measure displacement highly accurately.

SUMMARY OF THE INVENTION

It is an object of the present invention to solve the above-noted problems and to provide a surface reflection type phase grating which is easy to manufacture and is chemically stable. It is also an object of the present invention to provide a highly accurate displacement measuring apparatus adopting this phase grating.

According to a first aspect of the present invention there is provided a reflection type phase grating as specified in claims 1 to 7. According to a second aspect of the present invention there is provided a reflection type optical scale as specified in claims 8 to 10. According to a third aspect of the present invention there is provided a displacement measuring device as specified in claim 11. According to a fourth aspect of the present invention there is provided a method of manufacturing an optical scale as specified in claims 12 to 14.

A technical feature of the surface reflection type phase grating according to the present invention for achieving the above object is that a first metal film is formed on a substrate, and a concavo-convex second phase grating pattern having a periodic structure is formed on the first metal film by a further metal film. Here, the second film thickness is determined so as to be such that first-order diffraction by a light beam emitted from a light source used is substantially maximized.

Also, a technical feature of the surface reflection type phase grating according to the present invention is that a transparent dielectric film is formed on the phase grating pattern.

The etchants for the two kinds of metal film differ from each other, and therefore, even if the metal film on a surface side which has been worked into a grating shape comes off, the metal film on the underlayer is not etched. Therefore, the metal film on the surface side is formed with such a film thickness d that first order diffraction of incident light becomes a maximum, whereby it becomes unnecessary to accurately control the depth by etching.

Also, the light is reflected and diffracted by the metal film on the surface side and the metal film on the underlayer and therefore, the light does not pass through the substrate, and the loss due to the reflection or absorption by the glass substrate becomes zero and therefore, diffracted light of greater intensity can be obtained.

Also, it becomes unnecessary to form reflection preventing films on the glass substrate and therefore, the aforedescribed problems can be solved.

Further, according to the surface reflection type phase grating according to the present invention, the upper portion of the metal grating is provided with a dielectric film, whereby it can be made chemically stable. It is thus possible to suppress the deterioration or corrosion of the metal film, and improve the physical strength of the grating, and accordingly, the durability thereof can be improved.

Also, since the second metal film is on the surface side and the first metal film is on the substrate side, the light does not pass through the substrate, so the loss of light due to reflection or absorption by the substrate does not occur and accordingly, diffracted light of greater intensity can be obtained.

When the upper portion of the phase grating pattern is formed by a transparent dielectric material, there is a loss due to reflection or absorption. However, if the thickness of the transparent dielectric film is sufficiently small compared with the thickness of the substrate, the loss is much smaller than in a back reflection grating type diffraction grating.

The above and other objects, features, and advantages of the invention will become more apparent from the following detailed description taken in conjunction with the accompany drawings.

BRIEF DESCRIPTION OF THE DRAWINGS

Fig. 1 is a cross-sectional view of a surface reflection type phase grating according to the present invention.
Fig. 2 is a flow chart of a manufacturing process.

Fig. 3 is a cross-sectional view of a modified grating according to the invention.
Fig. 4 is a cross-sectional view of another modified grating according to the present invention.
Fig. 5 is a cross-sectional view of an alternative surface reflection type phase grating according to the invention.
Fig. 6 is a cross-sectional view of a surface reflection type phase grating according to a further embodiment of the invention.
Fig. 7 is a cross-sectional view of a surface reflection type phase grating according to the prior art.
Fig. 8 is a cross-sectional view of a back reflection type phase grating according to the prior art.
Fig. 9 shows the optical scale of the present invention mounted on a displacement measuring apparatus.

DESCRIPTION OF THE PREFERRED EMBODIMENTS

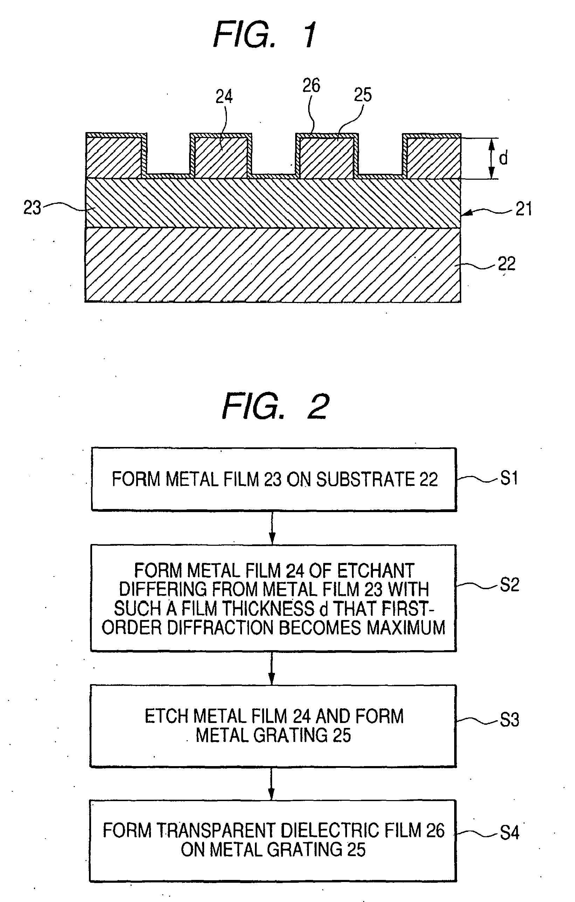

The invention will now be described, by way of example only, with reference to the embodiments shown in Figs. 1 to 6.

[Embodiment 1]

Fig. 1 is a cross-sectional view of a surface reflection type phase grating 21 having a relief type diffraction grating having a rectangular cross-sectional shape.

First metal film 23 is formed on a substrate 22.

On the first metal film 23, there are formed metal gratings 24 of a rectangular cross-sectional shape having a thickness d by second metal film formed of a material differing from that of the first metal film 23.

The thickness d of the metal gratings 24 is set so that first-order diffraction is maximized.

Here, when n is the refractive index of the substrate, and $\lambda$ is the wavelength of a light source used, the thickness d of the diffraction grating for which the first-order diffraction becomes a maximum is

$$d = n\lambda/4.$$

Further, on the surfaces of the metal gratings 24 and the first metal film 23 exposed therebetween, there is provided a transparent dielectric film 26 formed of e.g. $SiO_2$ by CVD or other suitable deposition method.

As described above, the transparent dielectric film 26 formed of $SiO_2$ is formed on the first metal film 23 and the second metal film 24, whereby the first metal film 23 and the second metal film 24 are not exposed to the atmosphere and the quality of the film become stable. Accordingly, the quantity of diffracted light does not decrease or fluctuate.

Accordingly, when the diffracted rays are made to interfere with each other by the surface reflection type phase grating 21, any change in the brightness and darkness of the light forming the interference pattern is detected to thereby measure the amount of displacement of an object to be inspected, thus a stable output signal is obtained from a light receiving element.

As a result, it becomes possible to perform the measurement with high accuracy.

Also, the transparent dielectric film 26 in the present embodiment is formed of $SiO_2$, but alternatively or in addition, use can be made of one or more of $TiO_2$, $Ta_2O_5$, $ZrO_2$, $HfO_2$, $MgF_5$ and $Al_2O_3$.

Furthermore, so-called non-stoichimetric film compositions e.g., SiOX, wherein x is less than 2 might be preferable used as a material for the transparent dielectric film 26. Hence, above materials also can be read as TiOX, TaOX, ZrOX, HfOX, MgFX, and AlOX.

Fig. 2 shows a flow chart of the manufacturing process of this surface reflection type phase grating 21.

First, at step S1, the first metal film 23 is formed on the substrate 22. Then at step S2, the second metal film 24 of an metal differing from that of the first metal film 23 is formed on the first metal film 23 so as to have a film thickness d for which first-order diffracted light becomes a maximum.

Subsequently, at a step S3, the second metal film 24 on the surface side is etched to thereby form the metal gratings 24 of a rectangular cross-sectional shape. Then at a step S4, the transparent dielectric film 26 is formed on the metal gratings 24 by the use of a deposition method such as e.g. CVD.

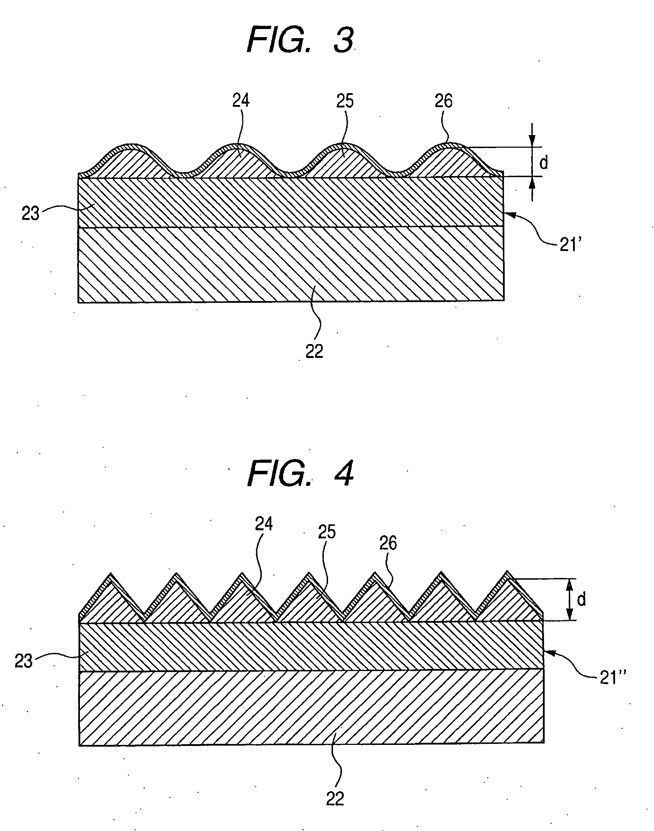

Fig. 3 shows a surface reflection type phase grating 21' which is a modification of the above in which a sine-save-shaped metal grating 24 is formed.

Fig. 4 shows a surface reflection type phase grating 21" which is a further modification in which a triangular-wave-shaped metal grating 24 is formed.

Each of the surface reflection type phase gratings 21, 21' and 21" comprises two layers, i.e., the first metal film 23 and the second metal film 24. The upper layer, i.e., the second metal film 24 is formed as a relief type diffraction grating having a depth d, and the transparent dielectric film 26 is further formed thereon.

Again in the surface reflection type phase gratings 21' and 21", an effect similar to that of the above-described surface reflection type phase grating 21 is obtained.

[Embodiment 2]

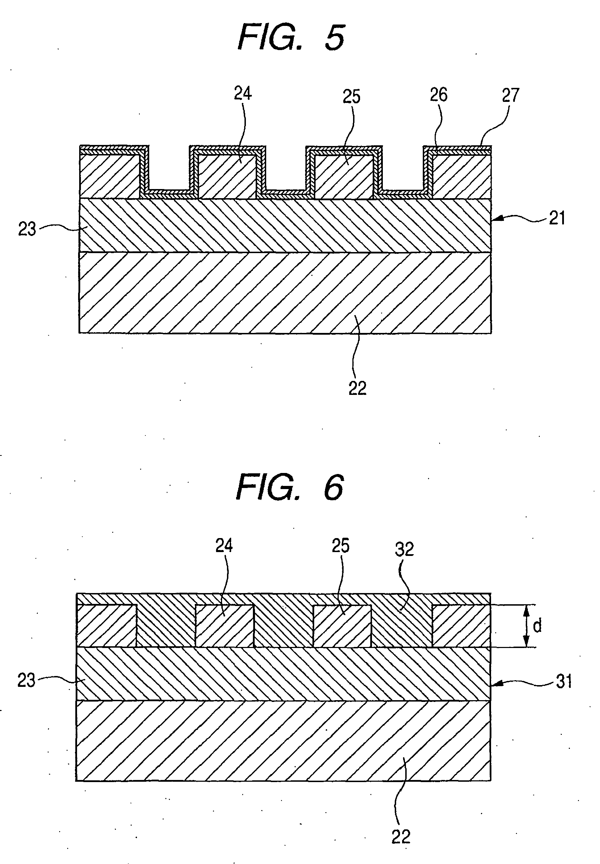

As in Embodiment 1, a transparent dielectric film 26 comprising (for example) $SiO_2$ film is formed. Subsequently, as shown in Fig. 5, an $MgF_2$ film 27 is formed on the transparent dielectric film 26. The film thickness of this $MgF_2$ film 27 is designed such that transmittance is maximized.

In the case of this surface reflection type phase grating 21, light passes through the $MgF_2$ film 27 and the transparent dielectric film 26 formed of $SiO_2$, whereby an anti-reflection effect occurs, and the loss of the light can be suppressed. Accordingly, when diffracted rays produced by the surface reflection type phase grating 21 are made to interfere with each other, and any change in the brightness and darkness of the light forming the interference pattern is detected to thereby measure the amount of displacement of the object to be inspected, a stable output signal is obtained from a light receiving element, and still more highly accurate measurement becomes possible.

[Embodiment 3]

Fig. 6 shows a cross-sectional view of a surface reflection type phase grating 31 according to Embodiment 3. In Fig. 6, the same members as those in Embodiment 1 are given the same reference characters.

In Embodiment 3, a transparent dielectric film 32 formed of $SiO_2$ is embedded among metal gratings 24 and in the surfaces of the metal gratings 24.

Further, the surface of the embedded transparent dielectric film 32 is smoothed by CMP (chemical mechanical polishing) or other known planarisation techniques, such that the metal gratings 24 are not exposed to the atmosphere and accordingly, the strength of the metal gratings 24 is improved.

Again by adopting Embodiment 3, highly accurate measurement becomes possible as in the embodiments described above.

Again in Embodiment 3, as in Embodiment 2, an $MgF_2$ film of a film thickness for which transmittance becomes maximum can be formed on the smoothed transparent dielectric film 32. Using such a construction, a reflection preventing effect is provided and loss of light can be reduced.

[Embodiment 4]

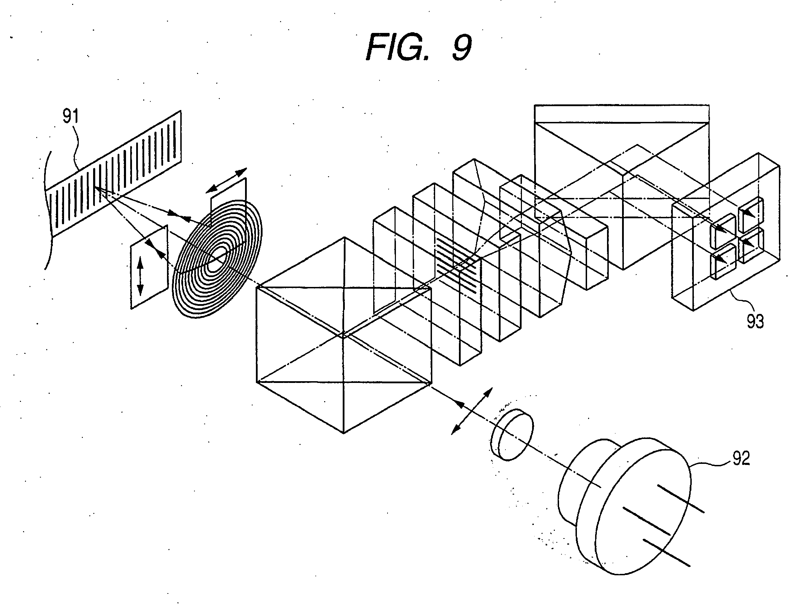

Fig. 9 shows an example in which the surface reflection type phase grating having the relief type diffraction grating shown in any one of Embodiments 1 to 3 is mounted as an optical scale on a displacement measuring apparatus.

The reference numeral 91 designates an optical scale using a surface reflection type phase grating having the relief type diffraction grating structure shown in any one of Embodiments 1 to 3.

The reference numeral 92 denotes a light source, e.g. a laser beam source.

The reference numeral 93 designates a light receiving element which causes light beams reflected and interfered with by the optical scale to interfere with each other, and receives the light forming the interference pattern and converts it into an electrical signal.

The converted signal is processed by a signal processing circuit, not shown, and thereafter is passed to a calculation processing circuit (CPU), not shown, to calculate the amount of relative displacement of the light source and the scale.

While in the present embodiments, there is disclosed an apparatus using a linear scale, use may also be made of a rotary type scale.

Also, of course, the optical system is not restricted to that of the present embodiment, but may be of any type.

As many apparently widely different embodiments of the present invention can be made without departing from the sprit and scope thereof, it is to be understood that the invention is not limited to the specific embodiment thereof except as defined in the appended claims.

This application claims priority from Japanese Patent Application No. 2004-373491 filed December 24, 2004, which is hereby incorporated by reference herein.

## Claims

1. A reflection type phase grating having:

    a substrate (22);
    a first metal film (23) formed on said substrate; and
    a phase grating formed on the first metal film by a second metal film (24), having a periodic structure and having a concavo-convex structure;

    wherein the depth (d) of said phase grating is set so that the first-order diffracted light produced by an applied light beam is substantially maximized.

2. A reflection type phase grating having:

    a substrate (22);
    a first metal film (23) formed on said substrate; and
    a phase grating formed on the first metal film by a second metal film (24), having a periodic structure and having a concavo-convex structure;

    wherein the depth of said phase grating satisfies the condition:

    $$d = n\lambda/4,$$

    where d is the depth of the phase grating, n is the refractive index of the substrate, and $\lambda$ is the wavelength of a light source used.

3. A reflection type phase grating according to Claim 1 or 2, wherein transparent dielectric film is formed on said phase grating.

4. A reflection type phase grating according to Claim 1 or 2, wherein said first metal and said second metal film are composed of metals which may be selectively etched relative to one another.

5. A reflection type phase grating according to Claim 3, wherein said transparent dielectric film has the concavo-convex portion of said phase grating embedded therein, and the surface thereof is substantially smooth.

6. A reflection type phase grating according to Claim 3, wherein an $MgF_2$ film is provided on said transparent dielectric film.

7. A reflection type phase grating according to Claim 3, wherein said transparent dielectric film includes at least one of the group of materials consisting of $SiO_2$, $TiO_2$, $Ta_2O_5$, $ZrO_2$, $HfO_2$, $MgF_2$ and $Al_2O_3$.

8. A reflection type optical scale including:

    a substrate;
    a first metal film formed on said substrate; and
    a phase grating formed on the first metal film by a second metal film, having a periodic structure and having a concavo-convex structure;

    wherein the depth (d) of said phase grating is set so that the first-order diffracted light produced by an applied light beam is substantially maximized.

9. A reflection type optical scale including:

    a substrate;
    a first metal film formed on said substrate; and
    a phase grating formed on the first metal film by second metal film, having a periodic structure and having a concavo-convex structure;

    wherein the depth of said phase grating satisfies the condition:

    $$d = n\lambda/4,$$

    where d is the depth of the phase grating, n is the refractive index of the substrate, and $\lambda$ is the wavelength of a light source used.

10. A reflection type optical scale according to Claim 8 or 9, wherein a transparent dielectric film is formed on said phase grating.

11. A displacement measuring apparatus for measuring the amount of relative displacement of an optical scale and a light source, including:

a light source having coherence;
a reflection type optical scale having a reflection type phase grating as claimed in any one of claims 1 to 7;
a light receiving element for detecting any change in the brightness and darkness of light from the interference pattern produced by diffracted light from said reflection type optical scale due to the incident light from said light source, and converted it into an electrical signal; and
calculating means for calculating the amount of relative displacement of the optical scale and the light source on the basis of the electrical signal outputted from said light receiving element.

12. A method of manufacturing an optical scale for use in a displacement measuring apparatus for measuring the amount of relative displacement of the optical scale and a light source, including:

a first step of forming a first metal film on a substrate;
a second step of forming a second metal film on said first metal film, the metals forming the first and second metal films being composed of different metals such that the second metal film may be selectively etched relative to the first metal film, the second metal film having a thickness for which first-order diffracted light produced by said light source is maximized; and
a third step of selectively etching the second metal film relative to the first metal film to thereby manufacture a metal grating.

13. A method of manufacturing an optical scale for use in a displacement measuring apparatus for measuring the amount of relative displacement of the optical scale and a light source, including:

a first step of forming a first metal film on a substrate;
a second step of forming a second metal film on said first metal film, the metals forming the first and second metal films being composed of different metals such that the second metal film may be selectively etched relative to the first metal film, the second metal film having a thickness satisfying the condition:
"$d = n\lambda/4$", when it is assumed that d is the thickness of the second metal film, n is the refractive index of the substrate, and $\lambda$ is the wavelength of a light source used; and
a third step of selectively etching the second metal film formed at said second step to thereby manufacture a metal grating.

14. A method according to Claim 12 or 13, further having:

a fourth step of forming transparent dielectric film on said metal grating.

# FIG. 1

# FIG. 2

| |
|---|
| FORM METAL FILM 23 ON SUBSTRATE 22 — S1 |
| FORM METAL FILM 24 OF ETCHANT DIFFERING FROM METAL FILM 23 WITH SUCH A FILM THICKNESS d THAT FIRST-ORDER DIFFRACTION BECOMES MAXIMUM — S2 |
| ETCH METAL FILM 24 AND FORM METAL GRATING 25 — S3 |
| FORM TRANSPARENT DIELECTRIC FILM 26 ON METAL GRATING 25 — S4 |

## *FIG. 3*

## *FIG. 4*

## FIG. 5

## FIG. 6

## FIG. 7

## FIG. 8

# FIG. 9

EP 1 674 895 A1

**European Patent Office**

## EUROPEAN SEARCH REPORT

Application Number

EP 05 25 8041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 445 456 B2 (SPECKBACHER PETER ET AL) 3 September 2002 (2002-09-03) * column 1, line 60 - column 5, line 19; figures 1-3 * | 1,2,8,9, 11 | G02B5/18 G01D5/38 |
| X | US 5 786 931 A (SPECKBACHER ET AL) 28 July 1998 (1998-07-28) * column 2, line 20 - column 3, line 64; figures 1,2a,2b * | 1,2,4,8, 9,11-13 | |
| X | WO 03/034105 A (JOHANNES HEIDENHAIN GMBH; SPECKBACHER, PETER; FLATSCHER, GEORG; DR. JO) 24 April 2003 (2003-04-24) | 1-5,7-11 | |
| A | * page 5, line 4 - page 8, line 2; figures 1,2 * * page 8, line 29 - page 10, line 18; figure 4 * | 12-14 | |
| X,P | EP 1 557 701 A (MITUTOYO CORPORATION) 27 July 2005 (2005-07-27) * paragraph [0019] - paragraph [0036]; figures 1-4 * * paragraph [0037] - paragraph [0042]; figures 6-8 * * paragraph [0043] - paragraph [0045]; figure 9 * | 1,2,4,8, 9,11-13 | TECHNICAL FIELDS SEARCHED (IPC) G02B G01D |
| X | GB 896 934 A (ASSOCIATED ELECTRICAL INDUSTRIES LIMITED) 23 May 1962 (1962-05-23) | 1-5,8-10 | |
| A | * page 1, line 9 - page 2, line 82; figures 1-6 * | 12-14 | |
| X | PATENT ABSTRACTS OF JAPAN vol. 016, no. 438 (M-1309), 11 September 1992 (1992-09-11) -& JP 04 151220 A (SEKINOSU KK), 25 May 1992 (1992-05-25) | 1,2,8,9 | |
| A | * abstract; figures 1(a)-(f) * | 12,13 | |

The present search report has been drawn up for all claims

| Place of search | Date of completion of the search | Examiner |
|---|---|---|
| Berlin | 27 March 2006 | Jacobs, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 674 895 A1**

**ANNEX TO THE EUROPEAN SEARCH REPORT
ON EUROPEAN PATENT APPLICATION NO.**          EP 05 25 8041

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2006

| Patent document cited in search report | | Publication date | Patent family member(s) | | Publication date |
|---|---|---|---|---|---|
| US 6445456 | B2 | 03-09-2002 | DE | 19652563 A1 | 18-06-1998 |
| | | | EP | 0849567 A2 | 24-06-1998 |
| | | | JP | 3287794 B2 | 04-06-2002 |
| | | | JP | 10318793 A | 04-12-1998 |
| | | | US | 2001046055 A1 | 29-11-2001 |
| US 5786931 | A | 28-07-1998 | AT | 210832 T | 15-12-2001 |
| | | | DE | 19608978 A1 | 17-10-1996 |
| | | | DE | 59509940 D1 | 24-01-2002 |
| | | | EP | 0742455 A1 | 13-11-1996 |
| | | | JP | 2891332 B2 | 17-05-1999 |
| | | | JP | 8286020 A | 01-11-1996 |
| WO 03034105 | A | 24-04-2003 | DE | 10150099 A1 | 17-04-2003 |
| | | | EP | 1436647 A2 | 14-07-2004 |
| | | | US | 2005052743 A1 | 10-03-2005 |
| EP 1557701 | A | 27-07-2005 | CN | 1648611 A | 03-08-2005 |
| | | | US | 2005207013 A1 | 22-09-2005 |
| GB 896934 | A | 23-05-1962 | NONE | | |
| JP 04151220 | A | 25-05-1992 | JP | 1902566 C | 08-02-1995 |
| | | | JP | 6024747 B | 06-04-1994 |

EPO FORM P0459

For more details about this annex : see Official Journal of the European Patent Office, No. 12/82

13